(19) Europäisches Patentamt
European Patent Office
Office européen des brevets

(11) Publication number: 0 095 850
B1

(12) **EUROPEAN PATENT SPECIFICATION**

(45) Date of publication of patent specification: **25.02.87**

(51) Int. Cl.$^4$: **C 11 B 3/00,** B 01 D 13/00

(21) Application number: **83302766.7**

(22) Date of filing: **16.05.83**

# (54) Process for purification of crude glyceride oil compositions.

(30) Priority: **16.05.82 JP 82794/82**

(43) Date of publication of application:
**07.12.83 Bulletin 83/49**

(45) Publication of the grant of the patent:
**25.02.87 Bulletin 87/09**

(84) Designated Contracting States:
**DE FR GB NL**

(56) References cited:
**DE-A-2 850 043**
**GB-A-2 084 606**
**GB-A-2 092 170**

**PATENTS ABSTRACTS OF JAPAN, vol. 2, no. 31, 1978, page 4304 C 77**

**PATENTS ABSTRACTS OF JAPAN, vol. 1, no. 157, 14th December 1977, 3460 M 78**

(73) Proprietor: **NITTO ELECTRIC INDUSTRIAL CO., LTD.**
**1-2, Shimohozumi 1-chome Ibaraki-shi**
**Osaka 567 (JP)**

(72) Inventor: **Iwama, Akio**
**1-2, Shimohozumi 1-chome**
**Ibaraki-shi Osaka (JP)**
Inventor: **Kamiyama, Yoshiyasu**
**1-2, Shimohozumi 1-chome**
**Ibaraki-shi Osaka (JP)**
Inventor: **Nakagome, Keisuke**
**1-2, Shimohozumi 1-chome**
**Ibaraki-shi Osaka (JP)**

(74) Representative: **Diamond, Bryan Clive et al**
**Gee & Co. Chancery House Chancery Lane**
**London WC2A 1QU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 095 850 B1**

Courier Press, Leamington Spa, England.

**Description**

The present invention relates to a process for purification of crude glyceride oil compositions by means of a semipermeable membrane.

Vegetable oils usually used as food oils include soybean oil, rapeseed oil, cotton seed oil, safflower oil, Indian corn oil, sunflower oil, rice bran oil and the like. In producing such vegetable oils, depending on the amount of oil contained therein, a raw material is pressed or the raw material is extracted with an organic solvent such as hexane to obtain a miscella (solvent and oil mixture), and, then, the organic solvent is removed by evaporation from the miscella to yield a crude glyceride oil composition. Such a crude glyceride oil composition generally contains 0.5 to 10% by weight of impurities including phospholipid such as lecithin, as main ingredient, waxes such as higher alcohols, organic sulfur compounds, peptides, aliphatic acids, hydrocarbons, carbohydrates, lower aldehydes, lower ketones, sterols, dye compounds and a small amount of metals. These gums and other impurities have an undesirable effect on the quality of the products, because they cause polymerization or decomposition during storage or on using or heating, to result in oil coloration, generation of unpleasant odors and acceleration of oxidation or deterioration. It is necessary, therefore, to remove the gum materials, waxes and other impurities from the crude glyceride oil composition, as much as possible.

For this purpose it has been customary that water is added to the crude glyceride oil composition to hydrate the gum material composed mainly of phospholipids and after the same is swollen and coagulated, the gum material is removed by centrifugal separation. Since the resultant de-gummed oil still contains 0.2 to 1.0% by weight of gum material, it is usually subjected to chemical treatment using chemicals such as alkali or acid to carry out removal of gum material and acid, namely, removal of mainly residual phospholipids and free aliphatic acids, followed by heated in vacuum together with an absorbing agent such as activated clay, to remove colors and other impurities such as heavy metals, aliphatic acids, soaps or gum materials, which cannot be removed by the above-described chemical treatment. Further, it is generally processed in a dewaxing step for removing waxes and saturated tri- or diglycerides which crystallize or cause turbidity in the oil at a low temperature. Thereafter, unpleasant odor components such as lower aldehydes, ketones and free aliphatic acids are removed in the final step to obtain a purified glyceride oil having a gum content of 50 ppm or less as the final product.

However, the above-described prior purification process requires complicated chemical treatments involving chemical reactions, apart from the final deodorizing step, and further it is desirable in order to obtain a purified glyceride oil suitable as food that the phospholipid content in the glyceride oil after the treatment for removing gum material and acid by chemicals is not more than 100 ppm in the decoloring and deodorizing step. Thus, in the prior process, it is necessary to carry out repeatedly the gum removal operation. Consequently, not only is a large amount of chemicals required and a considerable amount of glyceride oil lost, but at least a part of the glyceride oil deteriorates due to the chemical treatments for removing gum material and acid, which has a harmful influence upon the product glyceride oil and various secondary products obtained therefrom. Furthermore, it is expensive to treat the effluent which contains noxious chemicals and sludge, to allow it to be safely discharged.

In order to avoid such disadvantages, U.S. Patent 4,062,882 (Gupta) describes a novel process for purification of crude glyceride oil compositions. In accordance with this process, after a crude glyceride oil composition is diluted with an organic solvent such as hexane, it is brought under pressure into contact with an ultrafiltration membrane made of polysulfone, polyacrylonitrile or polyamide and the organic solvent is removed from the solution which has been forced through the membrane, to obtained a de-gummed oil. However, according to this process, the removal of phospholipids from the crude glyceride oil composition is not sufficiently high because of the characteristics of the ultrafiltration membrane, and, in the case of a crude glyceride oil composition containing several % by weight of gum material, it is difficult by means of a single membrane treatment to reduce the gum material content in the degummed oil to the desired level of 100 ppm or less so as to allow it to be used as food, in the abovedescribed decoloring and deodorizing steps. Thus, as described in Japanese Patent Application (OPI) No. 84206/77 (the term "OPI" refers to a published unexamined Japanese patent application), an adsorption treatment using an expensive adsorbing agent such as alumina or silica is additionally required before or after the membrane treatment of the miscella. As the result, technical and commercial advantages of the membrane treatment used in place of chemical purification are much reduced. If the crude glyceride oil composition contains 2% by weight of gum material, the removal rate of the membrane for gum material should be 99.5% or more in order to reduce the gum material content in the resultant degummed oil to 100 ppm or less.

Further, in any of the above-described processes, since the ultrafiltration membrane used does not have sufficiently high resistance to glyceride oils and to organic solvents used as diluents and it easily softens at an elevated temperature, the molecular weight cut-off varies and its ability to remove gum material is lost; therefore, it is desirable that the membrane treatment is carried out at a comparatively low temperature of 10 to 20°C. As the result, since miscella having a comparatively high viscosity is subjected to membrane treatment, the amount of the liquid which is permeable is small and the treatment requires a long period of time. It is not preferred to reduce the glyceride concentration in the miscella, because the amount to be treated becomes large, though the viscosity is reduced to increase the amount of the permeable liquid.

We have found that a degummed oil having a gum material concentration of 100 ppm or less can be obtained by the process which comprises diluting a crude glyceride oil composition containing glyceride oil and phospholipids as main impurities with an organic solvent, carrying out membrane treatment using a semipermeable membrane of polyimide having a specified structural unit to obtain a large amount of a permeable liquid, from which the phospholipids are removed at a removal rate of 99.5% or more, and removing the organic solvent from the permeable liquid, and, consequently, purified glyceride oil of high quality which is suitable for food oil can be obtained by carrying out decoloring of the resulted degummed oil with an inexpensive adsorbent such as clay or activated clay, and thereafter carrying out deodorizing.

Various problems, however, arise in actual production of purified glyceride oil on an industrial scale by membrane treatment of crude glyceride oil compositions. The first problem is as follows. In order to obtain a purified glyceride oil as a membrane-permeable liquid at a high recovery rate via membrane treatment of miscella, it is usually necessary to concentrate the miscella to 50 to 100 times the original phospholipid concentration. However, the viscosity of the miscella increases as the phospholipids in the miscella are concentrated, and it is impossible to concentrate the miscella to so high phospholipid content, depending on the form of the semipermeable membrane used.

For example, in the so-called spiral type or pleat type of membrane module which has a large membrane area per unit volume and is advantageous for miniaturization of equipment, passages for the feed liquid to be subjected to membrane treatment are formed by spacers having a thickness of 0.3 to 3 mm. When using this membrane module for the membrane treatment of the miscella, the miscella can be concentrated only to at the most 20 times, whereby the miscella has a relatively low viscosity. Namely, since the feed liquid passages are formed by the spacers, the feed liquid causes a thin laminar flow and the passage resistance of the passages is large. When the miscella has a high viscosity, the pressure difference in the module becomes large which causes the so-called telescope phenomenon or bending phenomenon, by which the module is damaged or destroyed.

On the other hand, if internal pressure type tubular semipermeable membranes having an inner diameter of 3 to 25 mm are used, the miscella can be concentrated to 50 to 200 times since they have a large tube cross-sectional area. Furthermore, since such tubular membranes are generally reinforced with a paper tube, an unwoven fabric tube, a woven fabric tube, a porous polymer tube, a porous metallic tube or the like, it is possible to apply a pressure as high as 80 kg/cm$^2$ which permits an increase in the amount of membrane-permeable liquid even with miscella having a high viscosity. However, since the membrane area per unit volume is small, a one-stage membrane treatment using only the tubular semipermeable membranes requires large size equipment and the number of necessary membrane modules is markedly increased, which is undesirable from an industrial viewpoint. Thus, the second problem is that, if a membrane module in a form capable of treating miscella having a high viscosity is used, the apparatus becomes of very large size and various accompanying expenses thereby increase, to lose technical and commercial advantages of the membrane treatment.

As a result of studies to overcome the aforesaid problems in the purification of crude glyceride oil compositions by the membrane treatment, it has been found that by firstly treating the miscella of a crude glyceride oil composition with a spiral type or pleat type semipermeable membrane module and then treating the thus-concentrated miscella with a tubular semipermeable membrane module, the miscella can be highly concentrated and purified glyceride oil can be obtained at a high recovery rate while minimizing the number of membrane modules necessary.

Accordingly, the present invention provides a process for purification of a crude glyceride oil composition containing gum material as a main impurity, which comprises diluting the composition with an organic solvent, passing the resultant mixture under pressure past a semipermeable membrane as an ultrafilter to separate the solution into (a) a filtrate which passed through the membrane and is substantially free of phospholipid and (b) a concentrated solution not passed through the membrane and which is rich in phospholipid, and removing the solvent from at least one of the filtrate (a) and concentrate (b) to obtain a purified glyceride oil and/or a purified phospholipid, characterised in that the pressure separation is carried out in two steps by

(i) introducing the mixture into a feed liquid passage formed by a spacer made of a liquid permeable porous sheet which extends along the outside of a polyimide semipermeable membrane, withdrawing concentrated nonpermeable solution (b) from that passage, and withdrawing filtrate (a) from a membrane permeated liquid passage formed by a spacer made of a liquid permeable porous sheet inserted inside or forming a support for the membrane; the membrane being pleated or wound around a hollow tube which is connected with said permeated liquid passage so as to allow accumulation of the filtrate, and the membrane and the spacers being multiplely folded on themselves or spirally wound, the filter means all being within a pressure vessel; and

(ii) introducing the concentrated solution (b) from step (i) into a module containing an internal pressure type tubular semipermeable membrane having an internal diameter of 2 to 25 cm to again separate (a) a filtrate and (b) a phospholid-rich concentrated solution.

The module in which the above-described spacers are spirally wound around the hollow tube is called a spiral type membrane module, and a module in which the spacers are bent like a folding screen is called a pleat type semipermeable membrane module.

These kinds of module are known. For example, the spiral type membrane module is described in

Japanese Patent Publications Nos. 14216/69, 9804/71, 8629/74 and 35191/76 and Japanese Patent Applications (OPI) Nos. 2681/75 and 23875/78, and the pleat type semipermeable membrane module is described in Japanese Utility Model Registration Applications (OPI) Nos. 174904/80 and 174905/80.

Reference is now made to the drawings, wherein:

Figure 1 is a cross-section view of a spiral type membrane module suitable for use in the process of the present invention; and

Figures 2 and 3 each is a flow chart of one embodiment of the process of the present invention.

Figure 1 is an embodiment of the so-called multileaf spiral type membrane module, which indicates the section thereof before the step in which the envelope semipermeable membranes in which the first spacer is inserted to form passages for the membrane permeable liquid and the second spacers for forming the passages for the feed liquid are spirally wound around the hollow tube for collecting the membrane permeable liquid. Namely, a liquid permeable porous sheet 3 is sound around the outside of the hollow tube 2 having suitable openings 1 to fix it thereon. An envelope semipermeable membrane 4 is allowed to adhere to this porous sheet along the axis direction of the hollow tube so that the liquid flows from the opening part 5 into the abovedescribed opening, and the first spacer 6 made of a liquid permeable porous sheet is inserted between the opposite inside faces of the semipermeable membrane forming the inner part of the envelope to form the first liquid passage 7. The second spacer 8 made of a liquid permeable porous sheet is put between the outside face of the envelope semipermeable membrane 4 and the outside face of another envelope semipermeable membrane 4′ to form the second liquid passage. Further, when the semipermeable membrane is formed on a support such as woven fabric or nonwoven fabric, the first spacer 6 forming the passage for the membrane permeable liquid may be substituted by the above-described support such as woven fabric or nonwoven fabric. These envelope semipermeable membranes and the second spacers are spirally wound in layers around the hollow tube, and the wound product is inserted in a pressure tube (not shown in the drawing). A member for introducing the feed liquid into the second liquid passage as the feed liquid passage is attached to it and a member for taking the membrane permeable liquid passing through the envelope semipermeable membranes out of the pressure tube from the hollow tube through the first liquid passage as the feed liquid passage is attached to it to produce a spiral type membrane module. Further, the liquid in the feed liquid passage may flow in the axial direction of the hollow tube or may flow in the radial direction of the hollow tube.

In the present invention, the spacers for forming the feed liquid passages have a thickness of 0.3 to 2.5 mm and, preferably 0.4 to 1.5 mm. In the present invention, miscella of a crude glyceride oil composition is introduced into the above-described membrane module under pressure to concentrate it to 2 to 20 times, preferably 3 to 10 times, the original concentration. When the thickness of the spacers for forming the feed liquid passage is too small, the miscella cannot be concentrated to within the above range. On the other hand, when it is too large, though the miscella can be concentrated to within the above range, the membrane area per unit volume of the equipment is decreased which undesirably leads to an increase in equipment size. In the present invention, the concentration rate of miscella means a volume concentration rate of miscella treated by the membrane module and is defined as amount of miscella treated/amount of membrane impermeable liquid. Accordingly, in case that 100 l of miscella is treated to obtain 90 l of the membrane permeable liquid and 10 l of the membrane impermeable liquid, the miscella is concentrated to 10 times.

Concerning conditions for membrane treatent of the miscella by the spiral type or pleat type semipermeable membrane module, the linear velocity of the miscella to the membrane face is small as compared with the case of treating with the tubular membrane module, and it is generally 0.01 to 3 m/second, preferably 0.05 to 1 m/second, and the pressure for supplying the miscella is generally 1 to 20 kg/$cm^2$ (all pressure herein are gauge pressures), preferably 1 to 10 kg/$cm^2$. Pressures in kg/$cm^2$ are converted to Pascals by a factor of $9.806 \times 10^4$; thus 3 kg/$cm^2$ = $29.4 \times 10^4$ Pa, 10 kg/$cm^2$ = $98.07 \times 10^4$ Pa and 20 kg/$cm^2$ = $196 \times 10^4$ Pa.

By selecting such treating conditions, the miscella can be concentrated to within the above-described range at a high permeable liquid amount by the use of the spiral type or pleat type semipermeable module. When the linear velocity for supplying the miscella is too low, the concentration polarization undesirably occurs. On the other hand, when the linear velocity is too high, the pressure difference in the membrane module is so large as to cause a telescope phenomenon or a bending phenomenon which undesirably leads to the danger of membrane breakdown. However, in general, the spiral type or pleat type semipermeable membrane module has characteristics that it can be operated under a high pressure as compared to the case of a capillary or hollow filament type membrane module and a comparatively high amount of permeable liquid can be kept.

In the first-step membrane treatment as described above, the miscella is concentrated to at most about 15 times. The viscosity of the miscella which is concentrated to about 15 times is usually about $0.5 \times 10^{-3}$ to $5 \times 10^{-3}$ Ns/$m^2$ (0.5 to 5 cps), although it varies depending on the glyceride oil content of the original miscella. Therefore, the miscella can be treated by the use of the spiral type or pleat type semipermeable membrane module while maintaining the amount of permeable liquid at a high level.

In the present invention, the thus-preliminarily concentrated miscella is further concentrated by the second-step membrane treatment using an internal pressure type tubular semipermeable membrane. The inner diameter of the tubular semipermeable membrane is 2 to 25 mm, preferably 3 to 17 mm, and more

preferably 5 to 15 mm, taking into account the concentration rate and viscosity of the concentrated miscella obtained by the first-step membrane treatment.

In the second-step membrane treatment, the miscella is concentrated to 3 to 200 times, preferably 5 to 100 times, the original concentration. Therefore, it is not acceptable to use a semipermeable membrane having a too small inner diameter. On the other hand, the use of a semipermeable membrane having a too large inner diameter undesirably leads to a reduction of membrane area per unit volume of the equipment as in the above-described case.

Since the tubular semipermeable membrane has a large tube cross-sectional area, the miscella which now has a high viscosity due to its high concentration can be efficiently treated, and the miscella can be treated at a large permeable liquid amount, even if the miscella is supplied to the tubular semipermeable membrane at a high pressure.

The miscella is treated under conditions such that the average linear velocity in the lengthwise direction of the membrane tube is 0.5 to 10 m/second, preferably 1 to 5 m/second, and the pressure for supplying is usually about 1 to 10 kg/cm$^2$, though it is not particularly restricted.

In the process of the present invention, as described above, the miscella is preliminarily concentrated to at most about 15 times by the use of the spiral type or pleat type semipermeable membrane module having a high membrane area per unit volume, and it is further concentrated by the use of an internal pressure type tubular semipermeable membrane. Accordingly, the equipment is minimized and the miscella can be treated at a high permeable liquid amount, i.e., in a short period of time. Thus, the process is suitable for purification on an industrial scale.

Figure 2 is a flow diagram of an embodiment for carrying out the process of the present invention. A miscella is firstly supplied from a storage tank 11 into a spiral type or pleat type semipermeable membrane module 12 in circulation. The membrane-permeable liquid 13 is sent to a permeable liquid tank 14 and the membrane impermeable liquid 15 is returned to the storage tank again. When the miscella is suitably concentrated, the flow path is changed by appropriate valving, whereby the miscella is supplied to a tubular membrane module 16 in circulation where it is further concentrated, while the membrane-permeable liquid is sent to a membrane permeable liquid tank.

Figure 3 is a flow diagram of another process for continuously treating the miscella according to the present invention. A miscella is continously supplied to a storage tank 11 and the miscella is continuously supplied from the storage tank to a spiral type or pleat type semipermeable module 12 where it is separated into a membrane-permeable liquid 13 and a membrane-impermeable liquid 15. The membrane-impermeable liquid is suppliled via another storage tank 17 to a tubular semipermeable membrane module 16 in circulation where it is separated again into a membrane-permeable liquid 13′ and a membrane-impermeable liquid 15′. In order to maintain steady state conditions of the equipment, a part of the membrane impermeable liquid is withdrawn as a concentrated liquid 18 from the equipment. If necessary, the membrane impermeable liquid 15 separated in the spiral type or pleat type semipermeable membrane module is returned to the storage tank 11 and circulated.

The semipermeable membrane used in the present invention can be made of a polyimide consisting essentially of a repeating unit represented by the formula

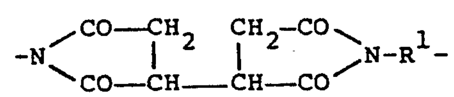

wherein R$^1$ is a divalent organic group, as described in detail in U.S. Patent 4,240,914. In the present invention, a semipermeable membrane comprising a polyimide represented by the above-described formula wherein R$^1$ is represented by the formula:

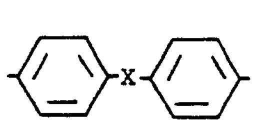

wherein X represents a divalent linking group, is preferably used. Examples of X include $—CH_2—$, $—C(CH_3)_2—$, —O— and $—SO_2—$, etc. In particular, polyimides wherein X is $—CH_2—$ or —O—, which have a constant molecular weight cut-off over a long period of time even when brought into contact with crude glyceride oil compositions heated to high temperatures are preferred.

In the present invention, it is possible to use polyimides consisting essentially of the above-described repeating unit which have an imidation rate defined as

$$\frac{\text{Number of imide rings}}{\text{Number of imide rings + number of amide acid bonds}}$$

of about 70% or more, preferably 90% or more and, more preferably 98 to 100%. Further, the inherent viscosity of the polyimides (measured at 30°C in N-methyl-2-pyrrolidone solution) is 0.55 to 1.00, preferably 0.60 to 0.85, and a number average molecular weight thereof is 20,000 to 120,000, preferably 30,000 to 80,000.

The process for producing semipermeable membranes having an anisotropic structure such as an ultrafiltration membrane or a reverse osmosis membrane, etc., consisting essentially of the above-described formula is disclosed in Japanese Patent Applications (OPI) Nos. 71785/79 and 94477/79. However, in the process of the present invention, it is preferred to use a semipermeable membrane produced by the process which comprises dissolving the above-described polyimide and a swelling agent represented by the general formula

$$R^3O—(CH_2CHR^2O)_n—R^1$$

wherein $R^2$, $R^3$ and $R^4$ each represents a hydrogen atom, a methyl group or an ethyl group, and *n* represents an integer of 1 to 5 where $R^2$ is a hydrogen and an integer of 1 to 3 where $R^2$ is a methyl group or an ethyl group, in an organic solvent (hereinafter, referred to as dope solvent) compatible with a coagulation solvent such as water, etc., to prepare a dope, applying the resulting dope to a suitable support, dipping it in a coagulation solvent which does not dissolve the above-described polyimide but dissolves the swelling agent and is compatible with the above-described dope solvent, and coagulating the above-described polyimide to form a membrane, as described in Japanese Patent Application (OPI) No. 152507/80.

In the above-described swelling agent, *n* is preferably an integer of 2 or 3 where $R^2$ is hydrogen atom, and *n* is preferably an integer of 1 or 2 where $R^2$ is a methyl group or an ethyl group. Accordingly, examples of the swelling agent include (poly)ethylene glycols and methyl or ethyl derivatives such as ethylene glycol, diethylene glycol, triethylene glycol, ethylene glycol monomethyl ether, ethylene glycol monoethyl ether, ethylene glycol dimethyl ether, diethylene glycol monomethyl ether, diethylene glycol dimethyl ether and triethylene glycol dimethyl ether. Further, examples of the dope solvent include N-methyl-2-pyrrolidone, N-ethyl-2-pyrrolidone, N-methyl-2-piperidone, dimethylformamide, dimethylacetamide, dimethyl sulfoxide, tetramethyl urea and sulforan.

Further, as the coagulation solvent, water is generally used, but solvents which are compatible with the dope solvent and dissolve the swelling agent but coagulate the above-described polyimide may be used. For example, mixed solvents composed of at least one of methanol, ethanol, acetone, ethylene glycol, diethylene glycol and diethylene glycol monomethyl ether and water can be used, or these compounds can be used alone as the coagulation solvent.

Since the process for producing semipermeable membranes from a dope containing the polyimide and the swelling agent has been described in the above-described Japanese OPI references, detail thereof is omitted. It is preferred that the amount of the polyethylene glycol or other derivatives thereof represented by the above-described general formula used is 30 to 300 parts by weight, preferably 50 to 200 parts by weight, based on 100 parts by weight of the polyimide, and the concentration of the polyimide in the dope is 5 to 30% by weight.

The semipermeable membranes composed of a polyimide used in the present invention usually have a molecular weight cut-off of 10,000 to 100,000, preferably 10,000 to 50,000, semipermeable membranes called ultra-filtration membranes are generally preferred for use. When the molecular weight cut-off value is too small, the amount of the permeable liquid tends to be decreased. On the other hand, when this value is too high, the gum material separating ability tends to be poor.

The molecular weight cut-off can be determined by measuring the removal rate of the semipermeable membrane to a solute having a known molecular weight. Practically, it is preferred to measure the removal rate of the semipermeable membrane using a toluene solution of polyethylene glycol having a known average molecular weight and a monodisperse molecular weight distribution as a solute (concentration: 5,000 ppm). In the invention, therefore, the removal rate of the membrane is measured using toluene solutions of polyethylene glycols having different average molecular weights at a temperature of 25°C and a pressure of 3 kg/cm², and the minimum molecular weight of the polyethylene glycol having a removal rate of at least 95% is determined to be the molecular weight cut-off of the membrane.

Lecithin which is a typical component of phospholipids has a molecular weight nearly equal to that of triglyceride. At the membrane treatment conditions of the present invention, however, several ten to several hundred lecithin molecules associated together to form miscelle. Therefore, by bringing into contact with a semipermeable membrane having a molecular weight cut-off in the above-described range under pressure, phospholipid is almost completely removed by the membrane, whereby a degummed oil having a phospholipid concentration of 100 ppm or less can be obtained.

In the present invention, organic solvents are used in order to accelerate miscelle formation of phospholipid while at the same time diluting the crude glyceride oil composition. Such organic solvents are required to have a property of not dissolving the above-described polyimide semipermeable membrane. The molecular weight thereof is preferably smaller than that of the glyceride oil and is usually 50 to 200, preferably 60 to 150. Examples of the organic solvents include aliphatic hydrocarbons such as pentane, heptane and octane, alicyclic hydrocarbons such as cyclopropane, cyclopentane, cyclohexane and cycloheptane, aromatic hydrocarbons such as benzene, toluene and xylene, aliphatic ketones such as

acetone and methyl ethyl ketone, and lower aliphatic acid esters such as ethyl acetate and butyl acetate, which can be used alone or as a mixture of two or more of them. Aliphatic hydrocarbons such as hexane are preferably used.

The miscella prepared by diluting the crude glyceride oil composition with the organic solvent usually contains 10 to 90% by weight, preferably 20 to 50% by weight of glyceride oil, but it is not limited thereto.

Depending on the type of raw material, the crude glyceride oil composition can be extracted directly from the freed material with the organic solvent. In the present invention, the thus-extracted liquid may be subjected to the membrane treatment as such. The term "extraction" is construed to be the same as the dilution with the organic solvent. In addition, glyceride oil compositions obtained by distilling away the solvent after the solvent extraction by the prior purification process can be used as the crude glyceride oil compositions in the present invention, and, of course, compositions obtained by pressing a raw material can be used as the crude glyceride oil. Furthermore, if desired, gum material-containing glyceride oil obtained at any desired stage of the prior purification process can be used as the crude glyceride oil. The term "miscella" is used hereinafter to refer to a solution of the crude glyceride oil composition in the organic solvent, as described above.

In the present invention, then, the miscella of the crude glyceride oil composition, namely, the solution of the crude glyceride oil composition in the organic solvent is brought under pressure into contact with the polyimide semipermeable membrane at a temperature at which evaporation of the organic solvent is not significant, which is usually from 0°C to 150°C, preferably from 0°C to 100°C and more preferably 0°C to 80°C. Generally, by raising the treatment temperature, the amount of the permeable liquid processed can be increased. In the present invention, even if the membrane treatment is carried out at a higher temperature, the polyimide semipermeable membrane maintains its molecular weight cut-off at a substantially constant level, and thus the membrane permeable liquid contains substantially no phospholipid.

At a temperature lower than 0°C, however, the amount of the permeable liquid is too small from a practical viewpoint. On the other hand, if the treatment temperature is too high, there is the danger that the miscelle composed mainly of phospholipid is thermally decomposed and cannot be effectively removed by the membrane.

The process of the present invention is suitable for the purification of crude vegetable glyceride oil compositions containing a large amount of phospholipid such as lecithin, and, in addition, it can be applied to the purification of crude animal glyceride oil compositions. Further, since lecithin, etc., are useful and valuable materials, they can be recovered, if necessary, from the membrane impermeable liquid. Usually, after the membrane impermeable liquid is diluted again with the organic solvent such as hexane, etc., and subjected to membrane treatment according to the present invention, the organic solvent is removed from the membrane impermeable liquid, by which phospholipid having a high purity can be obtained.

When the organic solvent is removed by distillation or other means from the solution of the above-described degummed glyceride oil in the organic solvent, degummed oil is obtained. The degummed oil obtained as described above has a residual gum material content of 100 ppm or less and under good conditions, 50 ppm or less.

The glyceride oil degummed as described above is subjected to decoloring and deodorizing by a prior conventional process, by which highly purified oil suitable a food oil can be obtained.

Furthermore, by means of the process of the present invention, when the crude glyceride oil composition containing several % by weight of phospholipid is diluted with an organic solvent and subjected to 2-stage membrane treatment by the membrane module equipped with a semipermeable membrane composed of polyimide, degummed oil containing 100 ppm or less of phospholipid can be obtained by removing the organic solvent. Accordingly, by carrying out decoloring with an inexpensive adsorbent such as clay or activated clay and then deodorizing, remarkably purified glyceride oil which can be used directly for food can be obtained. Namely, according to the present invention, highly purified glyceride oil capable of use for food can be obtained by only the physical treatment, namely, membrane treatment without requiring multistage chemical treatment, and at the same time, the yield of the purified glyceride oil is increased. Further, in the present invention, if the polyimide semipermeable membrane is used as the semipermeable membrane, impurities having a comparatively low molecular weight such as saccharoses and amino acids, etc., are embedded inside miscelles of the phospholipid and removed by the membrane, by which purified glyceride oil having a remarkably high quality can be obtained.

The present invention is illustrated with a reference example and examples of the invention

Reference Example

Production of Polyimide Ultrafiltration Membrane

To an N-methyl-2-pyrrolidone solution containing 28% by weight of the polyimide having the above-described formula wherein $R^1$ was

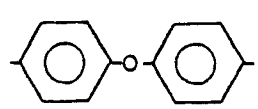

and having an imidation rate of 99% or more and an inherent viscosity (ηinh) of 0.73, 100 parts by weight of

diethylene glycol based on 100 parts by weight of polyimide were added as a swelling agent to prepare a homogeneous dope. Using this dope, a sheet membrane having a thickness of 200 μm and a molecular weight cut-off of 20,000 was obtained by the conventional method.

The resulting semipermeable membrane was formed into the shape of an envelope, and a porous spacer having a thickness of 0.3 mm was inserted between the inside faces. As shown in Figure 1, the opening part of the envelope was allowed to adhere to the opening on the wall of the hollow tube as the membrane permeable liquid tube so that the membrane permeable liquid flowed from the permeable liquid passage in the membrane to the hollow tube. On the other hand, porous spacers having a thickness of 0.7 mm were put along the outside of the above-described envelope semipermeable membrane. They were spirally wound around the hollow tube and put in a pressure tube made of metal having an outer diameter of 94 mm and a length of 770 mm to produce a spiral type membrane module having an effective membrane area of 5.7 $m^2$.

On the other hand, tubular semipermeable membranes having an inner diameter of 12 mm were produced from the above-described dope. 18 tubular membranes were inserted in a pressure tube made of metal having an outer diameter of 107 mm and a length of 770 mm so as to be arranged in a row along the axis of the tube. U-shaped tubes were attached to the end of each tube so that the feed liquid flowed in 18 tubular membranes in series, by which a tubular semipermeable membrane module having an effective membrane area of 0.48 $m^2$ was produced.

## Example 1

The membrane modules obtained in the above Reference Example were arranged as shown in Figure 2 to provide a membrane treatment apparatus.

600 l of soybean oil miscella composed of 30 parts of a crude soybean oil composition containing 1.81% by weight of phospholipid and 70 parts by weight of hexane was subjected to membrane treatment under conditions shown in Table 1.

The term "Gupta process" used hereinafter means the prior art process disclosed in U.S. Patent 4,062,882.

Experiment (1) (Gupta process, spiral module)

The miscella was supplied to only the spiral type membrane module by valving. When the amount of the membrane permeable liquid reached 533 l, no more membrane permeable liquid could be substantially obtained.

Experiment (2) (Gupta process, tubular module)

The miscella was supplied to only the tubular membrane module by valving. 1,930 minutes were required for obtaining 580 l of the membrane permeable liquid.

Experiment (3) (Invention process)

The miscella was firstly supplied to the spiral type membrane module in circulation to concentrate it to about 4 times in 102 minutes. Then, the resulted concentrated liquid was supplied only to the tubular semipermeable membrane module in circulation to concentrate it to 30 timnes in 295 minutes. Thus, 450 l of a membrane permeable liquid was obtained from the spiral type membrane module and 130 l of a membrane permeable liquid was obtained from the tubular membrane module. Consequently, a total of 580 l of the membrane permeable liquid was obtained.

The results of the above-described experiments are shown in Table 1. As is obvious from the results, the miscella cannot be concentrated to a high level by one stage treatment using the spiral type membrane module, while when the tubular membrane module alone is used, the miscella can be concentrated to a high level, but such takes a markedly long period of time. On the contrary, according to the process of the present invention, the treatment time is remarkably shortened.

Experiment (4) (Invention process)

As shown in Figure 3, the equipment was composed of one spiral type membrane module and three tubular membrane modules connected in parallel.

A miscella composed of 30 parts by weight of a crude soybean oil composition containing 1.80% by weight of phospholipid and 70 parts by weight of hexane was continuously supplied to the storage tank at a rate of 300 l/hour. At a steady state, the concentration factor was 30 times, and the membrane permeable liquid 13 and 13' was obtained at a rate of 290 l/hour and the concentrated liquid was obtained at a rate of 9 l/hour. The amount of the membrane permeable liquid from the spiral type membrane module was 238 l/hour and the amount of the miscella supplied to the storage tank 17 was 62 l/hr.

Experiment (5) (Gupta process, tubular module)

Using only one tubular membrane module, a soybean oil miscella was supplied in circulation at a rate of 28 l/hour as shown in Figure 3. At a steady state, the permeable liquid was obtained at a rate of 27.1 l/hour and the concentrated liquid was obtained at a rate of 0.8 l/hour. Therefore, in treating, 300 l/hour of the miscella with the tubbular membrane module alone, it would be necessary to use 12 tubular membrane

modules having the above-described dimensions.

The results are shown in Table 1. According to the process of the present invention, the number of necessary module is small and the size of the whole equipment is small.

Example 2

The concentrated liquid miscella obtained in Experiment (4) was composed of 32 parts by weight of a soybean oil composition containing 40.1% by weight of phospholipid and 68 parts by weight of hexane. Using the same equipment as in Example 1, 77 kg of the concentrated liquid miscella was supplied to the membrane module with supplementing hexane continuously in an amount corresponding to that permeated through the membrane. The total amount of hexane supplemented during the membrane treatment was 325 kg.

Experiment 6 (Gupta process, tubular module)

The miscella was supplied to only the tubular membrane module by valving. 1,125 minutes were required for obtaining 382 kg of the membrane permeable liquid.

Experiment 7 (Invention process)

The miscella was firstly supplied to only the spiral type membrane module in circulation to concentrate it to about 3 times in 46 minutes, and, thereafter, the concentrated miscella was supplied to the tubular membrane module in circulation by valving to concentrate to about 20 times in 197 minutes. Thus, 269 kg of the membrane permeable liquid was obtained from the spiral type membrane module and 114 kg of the membrane permeable liquid was obtained from the tubular membrane module. Consequently, a total of 383 kg of the membrane permeable liquid was obtained.

Results of the above-described experiments are shown in Table 2.

TABLE 1

| Experiment | Initial Concentration of Soybean Oil in Miscella | Membrane Treatment Conditions | | | | Permeable Liquid | | | | |
|---|---|---|---|---|---|---|---|---|---|---|
| | | Flow Rate | Pressure | Temperature | Treatment Time | Amount of Liquid | Recovery Rate | Concentration of Soybean Oil | Concentration of Phospholipid in Soybean Oil | Removal Rate to Phospholipid |
| | (wt%) | (l/min) | ($kg/cm^2$) | (°C) | (min) | (l) | (%) | (wt%) | (ppm) | (%) |
| (1) | 29.5 | 60(0.3)[c] | 3.0 | 55 | — | 533 | 88.8 | 28.8 | 28 | 99.9 |
| (2) | 29.6 | 14(2.1)[c] | 3.0 | 55 | 1,930 | 580 | 96.7 | 29.0 | 21 | 99.9 |
| (3) | 29.9 | a | a | 55 | 397 | 580 | 96.7 | 29.1 | 19 | 99.9 |
| (4) | 29.7 | b | b | 55 | — | — | 97.0 | 28.9 | 24 | 99.9 |
| (5) | 30.2 | 14 | 3.0 | 55 | — | — | 96.8 | 29.3 | 23 | 99.9 |

TABLE 2

| Experiment | Membrane Treatment Conditions | | | | Amount of Permeable Liquid | Amount of Concentrated Liquid | Phospholipid Obtained by Removal of Hexane from Concentrated Liquid | |
|---|---|---|---|---|---|---|---|---|
| | Flow Rate | Pressure | Temperature | Treatment Time | | | Phospholipid | Soybean Oil |
| | (l/min) | ($kg/cm^2$) | (°C) | (min) | (kg) | (kg) | (wt%) | (wt%) |
| (6) | 14 | 3.0 | 55 | 1,125 | 382 | 20 | 95.2 | 4.8 |
| (7) | a | a | 55 | 243 | 383 | 19 | 94.7 | 5.3 |

Note:

a: The conditions in each module were the same as those under which each module was operated separately.

b: The spiral type membrane module was operated under the following conditions: flow rate of 60 l/min, pressure 3 $kg/cm^2$, and temperature 55°C; and the tubular membrane module was operated under the same conditions as in Experiment (5).

c: The figures in parentheses indicate linear velocity (m/second).

## Claims

1. A process for purification of a crude glyceride oil composition containing gum material as a main impurity, which comprises diluting the composition with an organic solvent, passing the resultant mixture under pressure past a semipermeable membrane as an ultrafilter to separate the solution into (a) a filtrate which passed through the membrane and is substantially free of phospholipid and (b) a concentrated solution not passed through the membrane and which is rich in phospholipid, and removing the solvent from at least one of the filtrate (a) and concentrate (b) to obtain a purified glyceride oil and/or a purified phospholipid, characterised in that the pressure separation is carried out in two steps by

(i) introducing the mixture into a feed liquid passage formed by a spacer (8) made of a liquid permeable porous sheet which extends along the outside of a polyimide semipermeable membrane (4, 4'), withdrawing concentrated non-permeable solution (b) from that passage, and withdrawing filtrate (a) from a membrane permeated liquid passage (7) formed by a spacer (6) made of a liquid permeable porous sheet inserted inside or forming a support for the membrane; the membrane being pleated or wound around a hollow tube (1) which is connected with said permeated liquid passage (7) so as to allow accumulation of the filtrate, and the membrane (4, 4') and the spacers (6, 8) being multiplely folded on themselves or spirally wound, the filter means (4, 4', 6, 8) all being within a pressure vessel; and

(ii) introducing the concentrated solution (b) from step (1) into a module (16) containing in internal pressure type tubular semipermeable membrane having an internal diameter of 2 to 25 cm to again separate (a) a filtrate and (b) a phospholipid-rich concentrated solution.

2. A process as claimed in Claim 1, wherein a crude glyceride oil composition diluted with the organic solvent is concentrated to 2 to 20 times the original concentration by the first-step membrane treatment and thereafter concentrated to 3 to 200 times the original concentration by the second-step membrane treatment.

3. A process as claimed in Claim 1 or 2 wherein the glyceride oil content in the crude glyceride oil composition diluted with the organic solvent is 10 to 90% by weight.

4. A process as claimed in any of Claims 1 to 3, wherein the semipermeable membrane is made of polyimide consisting essentially of a repeating unit represented by the formula:

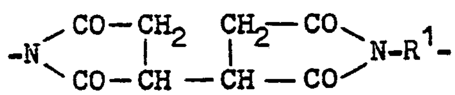

wherein $R^1$ is a divalent organic group.

5. A process as claimed in Claim 4, wherein $R^1$ is represented by the formula:

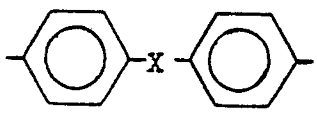

wherein X represents a divalent linking group.

6. A process as claimed in Claim 5, wherein X is $—CH_2—$ or —O—.

7. A process as claimed in any of Claims 1 to 6, wherein the organic solvent is a hydrocarbon, lower aliphatic acid ester or aliphatic ketone, or a mixture thereof and has a molecular weight of 50 to 200.

8. A process as claimed in Claim 7, wherein the organic solvent is hexane.

9. A process as claimed in any of Claims 1 to 8, wherein the semipermeable membrane passes molecules of a molecular weight not more than 10,000 to 100,000.

10. A process as claimed in any of Claims 1 to 9, wherein the crude glyceride oil composition diluted with the organic solvent is introduced into the semipermeable membrane module at a temperature of 0 to 100°C.

## Patentansprüche

1. Verfahren zum Reinigen von rohen Glyceridöl-Zusammensetzungen, enthaltend als Hauptverunreinigung Harzmaterial, umfassend das Verdünnen der Zusammensetzung mit einem organischen Lösungsmittel, Leiten der erhaltenen Mischung unter Druck durch eine semipermeable Membran als Ultrafilter unter Auftrennen der Lösung in

(a) ein Filtrat, welches durch die Membran hindurchgeht und im wesentlichen frei von Phospholipid ist, und

(b) eine konzentrierte Lösung, die nicht durch die Membran hindurchgeht und die reich an Phospholipid ist,

und Entfernen des Lösungsmittels von wenigstens dem Filtrat (a) und/oder dem Konzentrat (b) unter Erhalt

eines gereinigten Glyceridöls und/oder eines gereinigten Phospholipids, dadurch gekennzeichnet, dass die Drucktrennung in zwei Stufen durchgeführt wird, indem man

(i) die Mischung in eine Zuführungs-Flüssigpassage einführt, die mittels eines Abstandshalters (8) aus einem flüssigkeitsdurchlässigen, porösen Blatt, welches sich Längs der Aussenseite einer semipermeablen Membran aus Polyimid (4, 4') erstreckt, gebildet wird, Abziehen der konzentrierten nicht-durchlässigen Lösung (b) aus der Passage und Abziehen des Filtrats (a) aus einer membrandurchdrungenen Flüssigkeitspassage (7), die mittels eines Abstandshalters (6) aus einem flüssigen, durchlässigen, porösen Blatt, welches im Inneren eingesetzt ist, gebildet wird, oder die eine Unterstützung für die Membran bildet; wobei die Membran um ein hohles Rohr (1) gefaltet oder gewunden ist, welches mit der durchdrungenen Flüssigkeitspassage (7) so in Verbindung steht, dass eine Ansammlung des Filtrates ermöglicht wird und die Membran (4, 4') und die Abstandshalter (6, 8) mehrfach in sich selbst gefaltet oder spiralähnlich gewickelt sind und sich die Filtermittel (4, 4', 6, 8) alle innerhalb eines Druckgefässes befinden; und

(ii) Einführen der konzentrierten Lösung (b) aus Stufe (1) in ein Modul (16), enthaltend eine rohrförmige, semipermeable Membran vom Innendruck-Typ, mit einem Innendurchmesser von 2 bis 25 cm, um wiederum (a) ein Filtrat und (b) eine phospholipidreiche konzentrierte Lösung abzutrennen.

2. Verfahren gemäss Anspruch 1, bei dem eine rohe Glyceridöl-Zusammensetzung, die mit dem organischen Lösungsmittel verdünnt ist, um das 2- bis 20-fache der ursprünglichen Konzentration durch die erststufige Membranbehandlung konzentriert wird und anschliessend um das 3- bis 200-fache der ursprünglichen Konzentration durch die Membranbehandlung in der zweiten Stufe konzentriert wird.

3. Verfahren gemäss Anspruch 2, bei dem der Glyceridölgehalt in der Glyceridöl-Zusammensetzung mit dem organischen Lösungsmittel um 10 bis 90 Gew.% verdünnt ist.

4. Verfahren gemäss einem der Ansprüche 1 bis 3, bei dem die semipermeable Membran aus einem Polyimid hergestellt ist, das im wesentlichen aus wiederkehrenden Einheiten der Formel

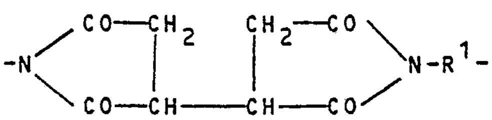

worin $R^1$ eine zweiwertige organische Gruppe bedeutet, besteht.

5. Verfahren gemäss Anspruch 4, bei dem $R^1$ die Formel

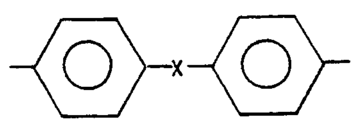

in welcher X eine zweiwertige, verbindende Gruppe bedeutet, hat.

6. Verfahren gemäss Anspruch 5, bei dem X $—CH_2—$ oder —O— ist.

7. Verfahren gemäss einem der Ansprüche 1 bis 6, bei dem das organische Lösungsmittel ein Kohlenwasserstoff, ein niedriger aliphatischer Säureester oder ein aliphatisches Keton oder eine Mischung davon ist und ein Molekulargewicht von 50 bis 200 hat.

8. Verfahren gemäss Anspruch 7, bei dem das organische Lösungsmittel Hexan ist.

9. Verfahren gemäss einem der Ansprüche 1 bis 8, bei dem die semipermeable Membran Moleküle mit einem Molekulargewicht von nicht mehr als 10.000 bis 100.000 hindurch lässt.

10. Verfahren gemäss einem der Ansprüche 1 bis 9, bei dem die mit dem organischen Lösungsmittel verdünnte, rohe Glyceridöl-Zusammensetzung in das semipermeable Membranmodul bei einer Temperatur von 0 bis 100°C eingeführt wird.

**Revendications**

1. Procédé pour la purification d'une composition d'huile glycéridique brute contenant une gomme comme principale impureté, qui consiste à diluer la composition par un solvant organique, à faire passer le mélange résultant sous pression à travers une membrane semi-perméable comme membrane d'ultrafiltration pour séparer la solution en (a) un filtrat qui est passé à travers la membrane et qui est pratiquement exempt de phospholipides et (b) une solution concentrée qui n'est pas passée à travers la membrane et qui est riche en phospholipides, et à séparer le solvant au moins du filtrat (a) ou du concentré (b) pour obtenir une huile glycéridique purifiée et/ou des phospholipides purifiés, caractérisé en ce que la séparation sous pression est mise en oeuvre en deux étapes par

(i) introduction du mélange dans un passage de liquide d'alimentation formé par un écarteur (8) en feuille poreuse perméable qui s'étend le long du côté extérieur d'une membrane semi-perméable (4, 4') en polyimide, soutirage de ce passage de la solution non filtrable concentrée (b) et soutirage du filtrat (a) d'un passage (7) du liquide filtré à travers le membrane formé à l'intérieur ou formant un support pour la membrane; la membrane étant cannelée ou enroulée autour d'un tube creux (1) qui est relié audit passage (7) du liquide filtré de manière à permettre l'accumulation du filtrat, et la membrane (4, 4') et les écarteurs

(6, 8) étant plusieurs fois pliés sur eux-mêmes ou enroulés en spirale, le dispositif filtrant (4, 4'; 6, 8) étant tout entier à l'intérieur d'un récipient sous pression; et

(ii) introduction de la solution concentrée (b) de l'étape (i) dans un module (16) contenant une membrane semi-perméable tubulaire du type à pression interne ayant un diamètre intérieur de 2 à 25 cm pour séparer à nouveau (a) un filtrat et (b) une solution concentrée riche en phospholipides.

2. Procédé selon la revendication 1, dans lequel une composition d'huile glycéridique brute diluée par le solvant organique est concentrée à 2—20 fois la concentration initiale par le traitement sur membrane de la première étape et ensuite concentrée à 3—200 fois la concentration initiale par le traitement sur membrane de la seconde étape.

3. Procédé selon la revendication 1 ou 2, dans lequel la teneur en huile glycéridique dans la composition d'huile glycéridique brute diluée par le solvant organique est de 10 à 90% en poids.

4. Procédé selon l'une quelconque des revendications 1 à 3, dans lequel la membrane semi-perméable est faite d'un polyimide consistant essentiellement en motifs récurrents représentés par la formule:

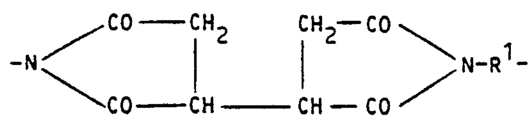

dans laquelle $R^1$ est un groupe organique divalent.

5. Procédé selon la revendication 4, dans lequel $R^1$ est représenté par la formule:

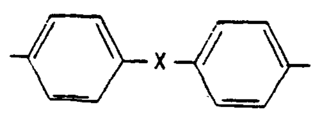

dans laquelle X représente un groupe de liaison divalent.

6. Procédé selon la revendication 5, dans lequel X est $—CH_2—$ ou —O—.

7. Procédé selon l'une quelconque des revendications 1 à 6, dans lequel le solvant organique est un hydrocarbure, un ester d'acide aliphatique inférieur ou une cétone aliphatique ou un de leurs mélanges et a un poids moléculaire de 50 à 200.

8. Procédé selon la revendication 7, dans lequel le solvant organique est l'hexane.

9. Procédé selon l'une quelconque des revendications 1 à 8, dans lequel la membrane semi-perméable laisse passer les molécules d'un poids moléculaire de pas plus de 10 000 à 100 000.

10. Procédé selon l'une quelconque des revendications 1 à 9, dans lequel la composition d'huile glycéridique brute diluée par le solvant organique est introduite dans le module à membrane semi-perméable à une température de 0 à 60°C.

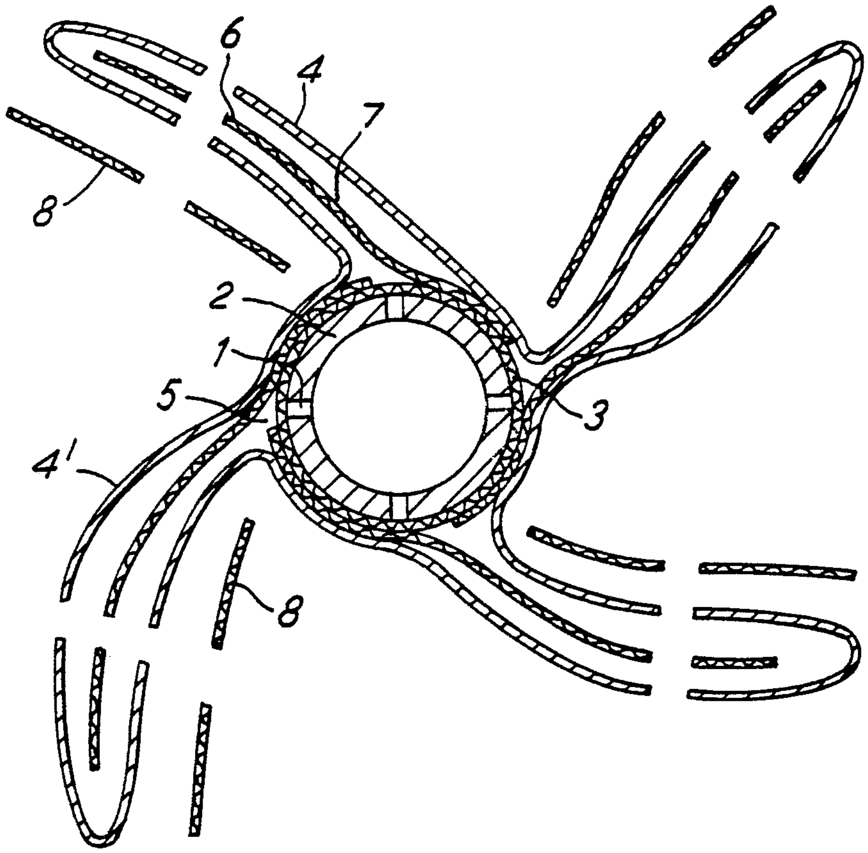


FIG.1

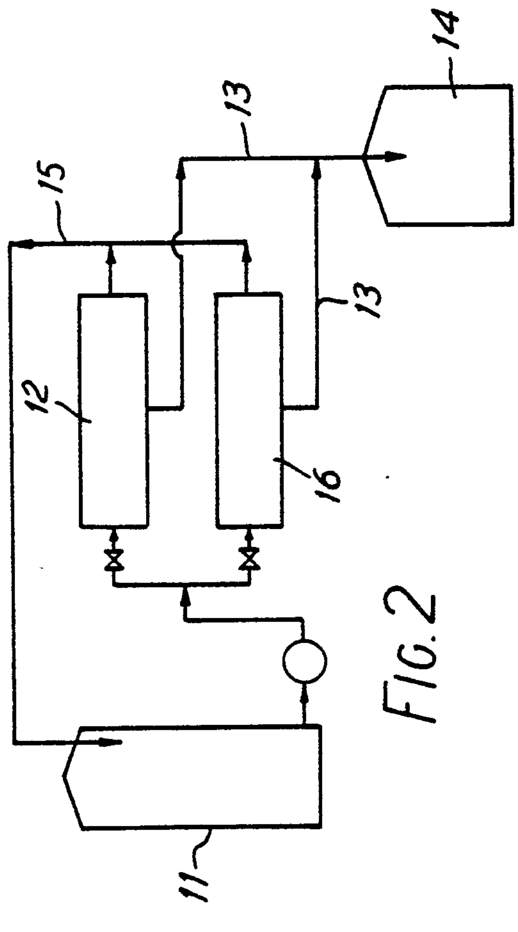


FIG. 2

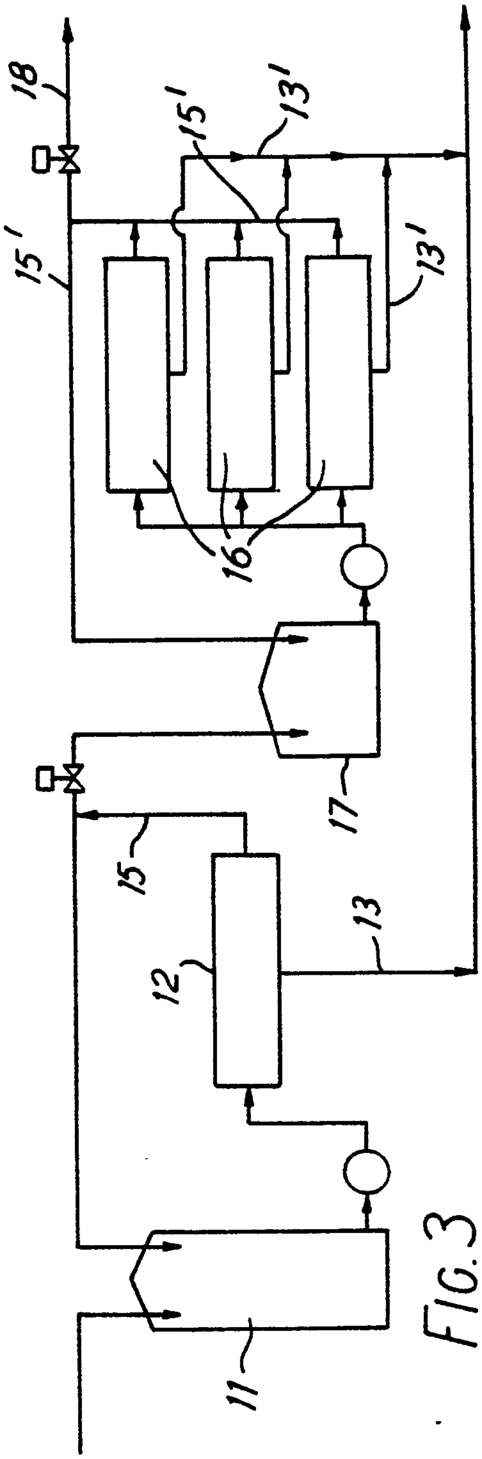


FIG. 3